# EUROPEAN PATENT APPLICATION

(11) **EP 4 597 184 A1**
(43) Date of publication of application: **06.08.2025**
(21) Application number: 22960947.4
(22) Date of filing: 29.09.2022
(51) Int. Cl.: G02B 6/30, G02F 3/00

(54) **DEVICE FOR COUPLING WAVEGUIDE AND OPTICAL FIBER, QUANTUM LIGHT CIRCUIT THAT USES SAME, AND METHOD FOR MANUFACTURING DEVICE**

(71) Applicant: FUJITSU LIMITED, Kawasaki-shi, Kanagawa 211-8588 (JP)
(72) Inventor: IWAI, Toshiki, Kawasaki-shi, Kanagawa 211-8588 (JP)
(74) Representative: Hoffmann Eitle
(86) International application number: PCT/JP2022/036554
(87) International publication number: WO 2024/069887

(57) **Abstract**

Provided is a device with improved reliability of coupling between a waveguide and an optical fiber. A device includes: a waveguide chip that includes a clad layer and an optical waveguide formed on the clad layer; and an optical fiber optically coupled to the optical waveguide, in which the clad layer has a hollow below a coupling region where the optical waveguide is optically coupled to the optical fiber, and the optical waveguide contacts the optical fiber in the coupling region, and deflects in a lamination direction of the waveguide chip inside the hollow.

## Description

### TECHNICAL FIELD

The present disclosure relates to a device for coupling a waveguide and an optical fiber, a quantum optical circuit using the same, and a method for manufacturing the device.

### BACKGROUND ART

Many studies have been conducted for development and practical use of quantum computing. As one of quantum computers, there is a quantum computer using a diamond spin approach that handles an electron spin, a nuclear spin, and a photon spin (circularly polarized light) in diamond as qubits. Since photons have a long information holding time, they are also used for quantum communication, and are expected to be applied to a quantum network. As a single photon source that emits a single spin or photon, a nitrogen-vacancy (NV) color center, a silicon-vacancy (SiV) color center, or the like in diamond is known. A photon extracted from the color center is coupled from a diamond waveguide to a single mode optical fiber, and detected by a detector (see, for example, Non-Patent Document 1).

As optical coupling from an optical fiber to an optical waveguide, a configuration is known in which an optical fiber having a tapered and thinned distal end and an optical waveguide having a tapered and thinned distal end are brought into contact with each other and adiabatic coupling (see, for example, Non-Patent Document 2). In order to perform calculation with a plurality of qubits, a configuration is desired in which a plurality of optical waveguides and a plurality of single mode fibers are coupled with high efficiency. In this case, it is desirable that the plurality of single mode fibers are collectively and stably held by a fiber array.

### CITATION LIST

### PATENT DOCUMENT

Patent Document 1: Japanese Laid-open Patent Publication No. 2-310507
Patent Document 2: Japanese Laid-open Patent Publication No. 9-061769
Patent Document 3: Japanese Laid-open Patent Publication No. 9-061674

### NON-PATENT DOCUMENT

Non-Patent Document 1: SCIENCE Vol. 354, Issue 6314, pp. 847-850 (2016)
Non-Patent Document 2: Optica Vol. 2, Issue 2, pp. 70-75 (2015)

### SUMMARY OF INVENTION

### TECHNICAL PROBLEM

In a case where the optical waveguide having the tapered distal end and the optical fiber having the tapered distal end are coupled, coupling position accuracy of 100 nm or less is needed. On the other hand, since manufacturing accuracy of the optical fiber or the fiber array is about ±1 µm, optical coupling efficiency varies for each optical fiber. Furthermore, since the taper of the optical waveguide and the taper of the optical fiber are merely in contact with each other in a minute region, coupling deviation easily occurs due to external vibration. In one aspect of the present disclosure, a device with improved coupling reliability and a quantum optical circuit using the same are provided.

### SOLUTION TO PROBLEM

A device in one embodiment includes a waveguide chip that includes a clad layer and an optical waveguide formed on the clad layer, and an optical fiber optically coupled to the optical waveguide, in which the clad layer has a hollow below a coupling region where the optical waveguide is optically coupled to the optical fiber, and the optical waveguide contacts the optical fiber in the coupling region, and deflects in a lamination direction of the waveguide chip inside the hollow.

### ADVANTAGEOUS EFFECTS OF INVENTION

A device with improved coupling reliability and a quantum optical circuit using the same are implemented.

### BRIEF DESCRIPTION OF DRAWINGS

FIG. 1 is a view illustrating a technical problem in evanescent coupling using tapered structures.
FIG. 2 is a schematic view of a waveguide-fiber coupling structure as an example of a device of an embodiment.
FIG. 3 is an enlarged view of a coupling region of FIG. 2.
FIG. 4 is a schematic view of a first modification of the waveguide-fiber coupling structure.
FIG. 5 is a schematic view of a second modification of the waveguide-fiber coupling structure.
FIG. 6 is a schematic view of a third modification of the waveguide-fiber coupling structure.
FIG. 7 is a schematic view of a fourth modification of the waveguide-fiber coupling structure.
FIG. 8 is a schematic view of a fifth modification of the waveguide-fiber coupling structure.
FIG. 9A is a manufacturing process view of a waveguide chip.
FIG. 9B is a manufacturing process view of the waveguide chip.
FIG. 9C is a manufacturing process view of the waveguide chip.
FIG. 9D is a manufacturing process view of the waveguide chip.
FIG. 10A is a manufacturing process view of a taper of an optical fiber distal end.
FIG. 10B is a manufacturing process view of the taper of the optical fiber distal end.
FIG. 11 is a view of a stress analysis model of an optical waveguide.
FIG. 12 is a diagram illustrating a stress distribution and a maximum stress point.
FIG. 13 is a diagram illustrating a relationship between an overlapping amount of an optical fiber and a waveguide and an energy propagation amount.
FIG. 14 is a diagram illustrating energy propagation to the waveguide with different overlapping amounts.
FIG. 15 is a schematic view of a quantum optical circuit using the device of the embodiment.

### DESCRIPTION OF EMBODIMENTS

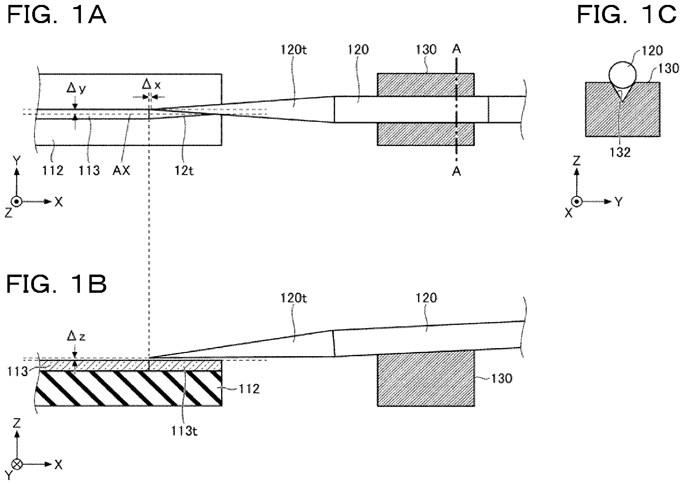

FIG. 1 illustrates a technical problem in optical coupling using tapered structures. In FIG. 1, A is a top view, B is a cross-sectional view taken along an optical axis AX of A, and C is a cross-sectional view taken along a line A-A of A. In a coordinate system of FIG. 1, it is assumed that a direction of the optical axis AX or a propagation direction of light is an X direction, a height or a lamination direction of an optical waveguide 113 is a Z direction, and a direction orthogonal to the X direction and the Z direction is a Y direction. The optical waveguide 113 is formed on a clad layer 112, and a distal end of a single-mode optical fiber 120 is brought into contact with the optical waveguide 113 to optically couple the optical waveguide 113 and the optical fiber 120. The optical fiber 120 is held in a V-shaped groove 132 of a fiber holding stand 130 in order to stabilize the coupling.

The optical waveguide 113 has a taper 113t at an end coupled to the optical fiber 120. The optical fiber 120 has a taper 120t at an end coupled to the optical waveguide 113. Cross-sectional areas of the taper 113t of the optical waveguide 113 and the taper 120t of the optical fiber 120 gradually change in the propagation (X) direction to implement the adiabatic coupling. The "adiabatic coupling" is coupling that maintains a single mode and maintains all power or energy within that mode. In other words, light is coupled between the optical fiber 120 and the optical waveguide 113 while maintaining the specific mode without loss of the power or energy or generating another mode.

The optical fiber 120 and the optical waveguide 113 are only in light contact with each other at the taper 120t and the taper 113t. Position accuracy of the optical waveguide 113 is determined by processing accuracy of the optical waveguide 113 by a semiconductor process. On the other hand, manufacturing accuracy of the fiber holding stand 130 or the optical fiber 120 is much lower than the processing accuracy of the optical waveguide 113, and there are variations of several microns in a position of the **V-**shaped groove 132 or a diameter of the optical fiber 120. In the adiabatic coupling using the tapered structures, coupling position accuracy of 100 nm or less is needed, but the diameter or the position of the V-shaped groove 132 varies for each optical fiber 120 or for each fiber holding stand 130, and position deviation of Δx, Δy, and Δz occur in the X direction, the Y direction, and the Z direction, respectively. Such a problem of the position deviation becomes more remarkable in a case where a plurality of the optical waveguides 113 and a plurality of the optical fibers 120 are coupled in parallel. Moreover, since the taper 120t of the optical fiber 120 is merely in contact with the taper 113t of the optical waveguide 113, the contact is easily released by slight external vibration, and the optical coupling is impaired.

In an embodiment, at least one of alignment accuracy in coupling between an optical waveguide and an optical fiber and resistance to external vibration is improved to improve reliability of the coupling between the waveguide and the optical fiber. In order to implement this, a part of a clad layer supporting the optical waveguide is removed, and a portion immediately below a coupling region where the optical waveguide and the optical fiber are coupled is made hollow. The optical waveguide contacts a core of the optical fiber at its coupling end and deflects in the hollow in a lamination direction with a weight of the core. By optimizing a contact distance between the optical waveguide and the optical fiber in an optical axis direction, even when the optical waveguide is deflected, the core of the optical fiber follows the deflection, and the optical coupling is maintained. Due to the deflection of the optical waveguide and the optical fiber core in the hollow, a margin of alignment in a height (Z) direction and the optical axis (X) direction increases.

In a case where a fiber guide that guides a distal end of the optical fiber into the hollow is provided in a waveguide chip in which the optical waveguide is formed, alignment accuracy in the X direction and a Y direction is improved. Coating of an inert gas may be applied to the coupling region between the optical waveguide and the optical fiber. In this case, the resistance to the external vibration is improved, and the reliability of the coupling is further improved.

Hereinafter, a configuration of a device for coupling a waveguide and an optical fiber will be described with reference to the drawings. In the embodiment, the device for coupling the waveguide and the optical fiber is referred to as a "waveguide-fiber coupling structure" for convenience. The following description is intended to embody technical ideas of the present disclosure, and is not intended to limit the present disclosure to the following description unless otherwise noted. In each of the drawings, elements having the same function or configuration are denoted by the same reference signs, and redundant description may be omitted. Sizes and positional relationships of the respective components illustrated in the respective drawings may be illustrated in an exaggerated manner to facilitate understanding of the invention.

### <Basic Configuration>

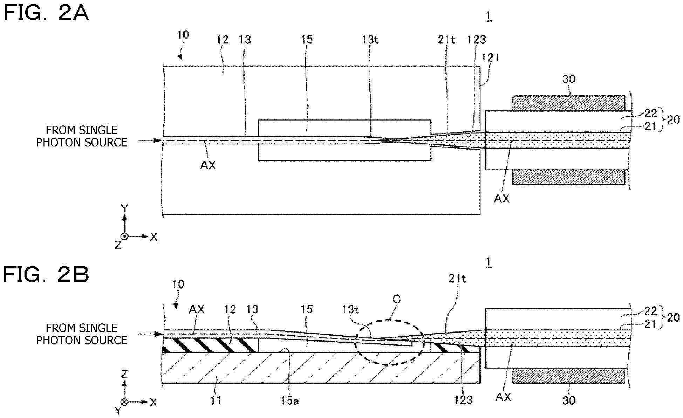

FIG. 2 is a schematic view of a waveguide-fiber coupling structure 1 of the embodiment. In FIG. 2, A is a top view, and B is a cross-sectional view along an optical axis AX. Similarly to FIG. 1, it is assumed that a direction of the optical axis AX is an X direction, a height or a lamination direction of an optical waveguide is a Z direction, and a direction orthogonal to the X direction and the Z direction is a Y direction. The waveguide-fiber coupling structure 1 is applied to, for example, a quantum optical circuit, and guides a photon emitted from a single photon source to a photodetector. As the single photon source, a quantum dot single photon source, or a compound vacancy center or an NV color center in diamond or Si may be used. In the embodiment, propagation of a photon in a red wavelength band generated by photoexcitation at an NV color center in diamond or silicon carbide (SiC) is assumed.

The waveguide-fiber coupling structure 1 includes a waveguide chip 10 and an optical fiber 20 optically coupled to an optical waveguide 13 formed in the waveguide chip 10. The waveguide chip 10 includes a clad layer 12 formed on a substrate 11 and the optical waveguide 13 formed on the clad layer 12. The optical fiber 20 is a single mode fiber in which an outer diameter of a clad 22 is 125 µm, and a diameter of a core 21 is 6 to 9 µm. The clad 22 is quartz, and the core 21 is, for example, Ge-added quartz in which a refractive index is increased by adding germanium (Ge).

The optical waveguide 13 and the core 21 of the optical fiber 20 are optically coupled in a coupling region C. The optical waveguide 13 may have a taper 13t that tapers toward the coupling region C. The core 21 of the optical fiber 20 may also have a taper 21t that tapers toward the coupling region C. In this case, taper angles and taper lengths of the taper 13t and the taper 21t are controlled such that the adiabatic coupling is obtained, in other words, a single mode is maintained without generating another mode.

The substrate 11 is an optional substrate that may support the clad layer 12 and the optical waveguide 13. An insulating substrate of glass, quartz, sapphire, magnesium oxide (MgO), or the like, or a semi-insulating substrate of silicon (Si), germanium (Ge), or the like not intentionally added with impurities may be used. Alternatively, a plastic substrate of polycarbonate, polyethylene naphthalate, an acrylic resin, or the like may be used. The clad layer 12 is formed of a material having a refractive index lower than that of the optical waveguide 13, and for example, a silicon oxide (SiO₂) film may be used. The optical waveguide 13 is formed of a material having a refractive index higher than that of the clad layer 12 and transparent to visible light including the red wavelength band. As the optical waveguide 13, a diamond crystal thin film, a sapphire (Al₂O₃ single crystal) thin film, a silicon nitride (SiN) thin film, an aluminum nitride (AlN) thin film, or the like may be used.

A part of the clad layer 12 of the waveguide chip 10 is removed, and a hollow 15 is provided immediately below the coupling region C between the optical waveguide 13 and the core 21 of the optical fiber 20. The optical waveguide 13 comes into contact with a distal end of the core 21 of the optical fiber 20 in the coupling region C, and deflects in a -Z direction (lamination direction of the waveguide chips 10) inside the hollow 15 due to a weight of the core 21. In FIG. 2, the clad layer 12 forming the hollow 15 is removed up to a surface of the substrate 11 for easy understanding of the configuration, but it is sufficient that a depth of the hollow 15 is a depth capable of absorbing deflection in the -Z direction of a coupling portion between the optical waveguide 13 and the core 21. A bottom surface 15a of the hollow 15 may be at a position shallower than the surface of the substrate 11. By overlapping the optical waveguide 13 and the core 21 of the optical fiber 20 in the coupling region C and deflecting the optical waveguide 13 together with the core 21 into the hollow 15, it is possible to suppress position deviation or coupling deviation in the Z direction and the X direction.

The waveguide chip 10 may be provided with a fiber guide 123 that guides the core 21 of the optical fiber 20 into the hollow 15. The fiber guide 123 extends from an end surface 121 of the waveguide chip 10 to the hollow 15 to guide the distal end of the core 21 of the optical fiber 20 to the coupling region C. When the core 21 is provided with the taper 21t, the fiber guide 123 has a shape matching the taper 21t of the core 21. The taper 21t has a conical shape elongated in the optical axis direction, and the fiber guide 123 is a V-shaped groove, a rectangular groove, a U-shaped groove, or the like that receives a side surface of the cone.

By providing the fiber guide 123, alignment accuracy in the Y direction between the optical waveguide 13 and the core 21 is improved. The fiber guide 123 is formed by photolithography and etching of a semiconductor process, and its processing accuracy is as high as that of the formation of the optical waveguide 13. Even when there is a variation of about ±1 µm in manufacturing accuracy of the optical fiber 20 or manufacturing accuracy of a fiber holding stand 30 holding the optical fiber 20, the distal end of the core 21 is guided into the hollow 15 by the fiber guide 123, whereby a distal end of the optical waveguide 13 and the distal end of the core 21 may be brought into contact with each other with high accuracy.

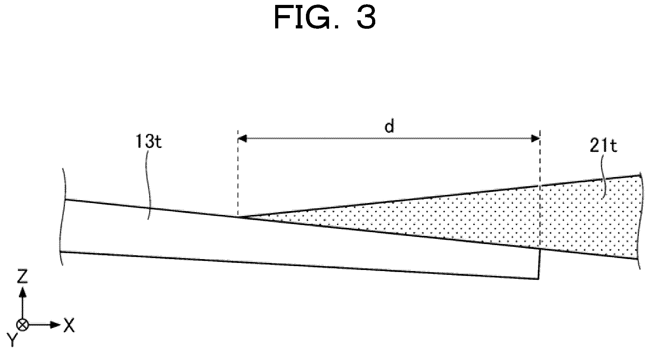

FIG. 3 is an enlarged view of the coupling region. In the coupling region C, the optical waveguide 13 and the distal end of the core 21 of the optical fiber 20 are in contact with each other over a predetermined distance d. In a case where the taper 13t and the taper 21t are provided at the distal ends of the optical waveguide 13 and the core 21, respectively, at least one of a width and a height of the optical waveguide 13 gradually decreases continuously toward the distal end. A photon propagated through the optical waveguide 13 is coupled to the core 21 by an evanescent field seeping from the optical waveguide 13. As will be described later, the distance d is designed such that energy propagation in the coupling region C is maximized, in other words, optical loss is minimized.

As described above, due to the weight of the core 21 of the optical fiber 20, both the optical waveguide 13 and the core 21 are deflected into the hollow 15, so that alignment of the optical waveguide 13 and the core 21 in the X direction and the Z direction is facilitated. When the fiber guide 123 is formed in the waveguide chip 10, position deviation in the Y direction is also suppressed. In a case where the taper 21t is provided in the core 21, the fiber guide 123 may be processed into a shape corresponding to inclination of the taper 21t. In this case, by fitting the core 21 to the fiber guide 123, position deviation in not only the Y direction but also the X direction may be suppressed.

### <First Modification>

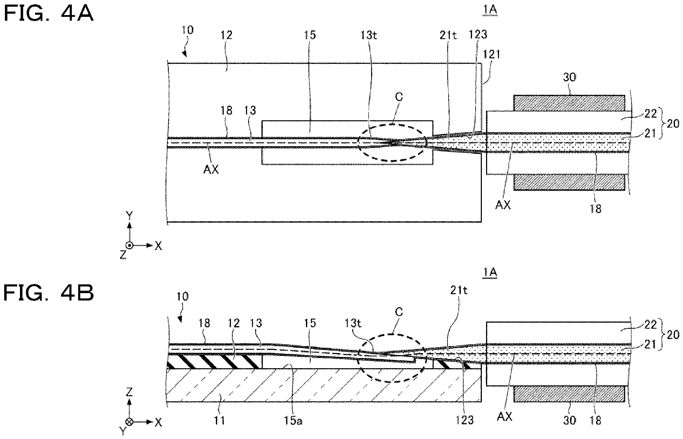

FIG. 4 is a schematic view of a waveguide-fiber coupling structure 1A as a first modification. In FIG. 4, A is a top view, and B is a cross-sectional view along the optical axis AX. In the waveguide-fiber coupling structure 1A, at least a portion included in the coupling region C of the optical waveguide 13 and the optical fiber 20 is covered with coating 18 of an inert gas. In the example of FIG. 4, the entire optical fiber 20 and optical waveguide 13 including the coupling region C are covered with the coating 18 of the inert gas. The coating 18 of the inert gas is formed as follows. The entire waveguide-fiber coupling structure 1A is disposed in a chamber set at a cryogenic temperature of about 4 K (-269°C). For example, an argon (Ar) gas (melting point: -189°C) is introduced into the chamber by an electromagnetic valve, so that Ar is vapor-deposited on surfaces of the optical fiber 20 and the optical waveguide 13 including the coupling region C.

The coating 18 of the inert gas ensures physical bonding in the coupling region C and significantly improves the resistance to the external vibration. However, the deflection coupling in the -Z direction in the coupling region C and the guiding of the core 21 by the fiber guide 123 improve the resistance to the external vibration even without the coating 18 of the inert gas. In a case where the coating 18 of the inert gas is provided, the waveguide-fiber coupling structure 1A needs to be used in an environment below -189°C. For example, in a case where the quantum dot single photon source is used, the single photon source and the waveguide-fiber coupling structure 1A may be housed inside the same cooler and used. With the configuration of FIG. 4, the reliability of the coupling between the optical waveguide 13 and the optical fiber 20 is further improved.

### <Second Modification>

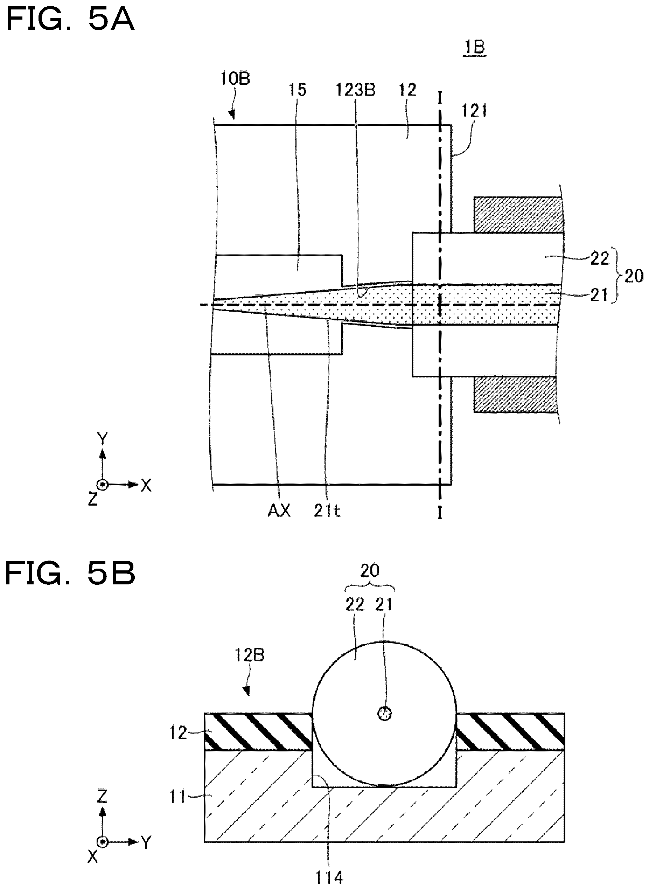

FIG. 5 is a schematic view of a waveguide-fiber coupling structure 1B as a second modification. In FIG. 5, A is a top view, and B is a cross-sectional view taken along a line I-I of A. In the waveguide-fiber coupling structure 1B, a part of an outer periphery of the optical fiber is held together with the taper 21t of the core 21 on a side of the end surface 121 of a waveguide chip 10B. A groove 114 for receiving an outer periphery of the clad 22 of the optical fiber 20 is formed at the end surface 121 of the waveguide chip 10B, and an outer periphery of the optical fiber 20 is held by the groove 114. A fiber guide 123B communicating with the groove 114 is provided in the clad layer 12 of the waveguide chip 10B. The optical fiber 20 is fixed to the groove 114, and the taper 21t of the core 21 is fitted to the fiber guide 123B. Since a distal end surface of the clad 22 abuts on a depth of the groove 114 of the waveguide chip 10B, a position of the optical fiber 20 in the X direction is automatically determined.

The groove 114 and the fiber guide 123B formed in the waveguide chip 10B are formed by the semiconductor process, and processing accuracy thereof is high. With the configuration of FIG. 5, position deviation of the optical fiber 20 itself with respect to the waveguide chip 10B is suppressed, and alignment accuracy in the X direction and the Y direction is improved. The fiber holding stand 30 may be combined with the configuration of FIG. 5. Even when there is a variation in accuracy of molding or machining in the fiber holding stand 30, the variation in the accuracy in the optical fiber 20 or the fiber holding stand 30 may be corrected or absorbed by the groove 114 of the waveguide chip 10B and the fiber guide 123B. With the configuration of FIG. 5, the reliability of the coupling between the optical waveguide 13 and the optical fiber 20 is further improved.

### <Third Modification>

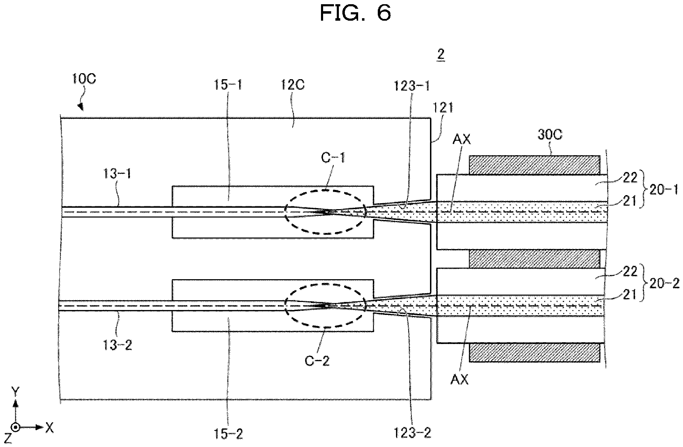

FIG. 6 is a schematic view of a waveguide-fiber coupling structure 2 as a third modification. In the waveguide-fiber coupling structure 2, a plurality of optical waveguides 13-1 and 13-2 is formed on a clad layer 12C of a waveguide chip 10C. The optical waveguides 13-1 and 13-2 are coupled to corresponding optical fibers 20-1 and 20-2, respectively. The optical fibers 20-1 and 20-2 may be held at a fiber holding stand 30C to configure an optical fiber array.

The optical waveguide 13-1 and the optical fiber 20-1 are optically coupled in a coupling region C-1, and the optical waveguide 13-2 and the optical fiber 20-2 are optically coupled in a coupling region C-2. The optical coupling in the coupling regions C-1 and C-2 may be adiabatic coupling. Hollows 15-1 and 15-2 are formed immediately below the coupling regions C-1 and C-2. In the hollow 15-1, the optical waveguide 13-1 and the optical fiber 20-1 are in contact with each other and are deflected in the -Z direction as illustrated in FIG. 3. In the hollow 15-2, the optical waveguide 13-2 and the optical fiber 20-2 are in contact with each other and are deflected in the -Z direction. With this configuration, coupling deviation in the Z direction and the X direction is suppressed in each of the coupling regions C-1 and C-2.

Fiber guides 123-1 and 123-2 may be provided on a side of the end surface 121 of the waveguide chip 10C. In this case, the distal ends of the core 21 of the optical fiber 20-1 and the core 21 of the optical fiber 20-2 are fixed, and position deviation in the Y direction is suppressed. In a case where the distal end of the core 21 of the optical fiber 20 is tapered, the fiber guides 123-1 and 123-2 are formed in shapes corresponding to inclination of the taper of the core 21, so that position deviation in both the Y direction and the X direction is suppressed. A guide configuration on the side of the end surface 121 of the waveguide chip 10C may be configured to hold a part of the outer periphery of the optical fiber 20 as illustrated in FIG. 5. In this case, position deviation of the optical fibers 20-1 and 20-2 themselves with respect to the waveguide chip 10C may be suppressed, and the optical fibers 20-1 and 20-2 may be stabilized.

### <Fourth Modification>

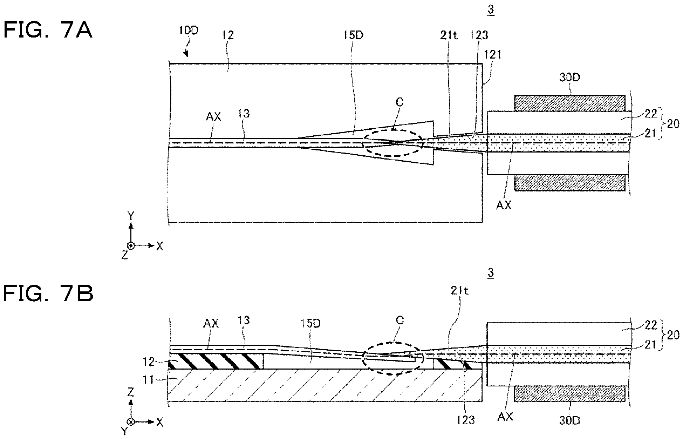

FIG. 7 is a schematic view of a waveguide-fiber coupling structure 3 as a fourth modification. In FIG. 7, A is a top view, and B is a cross-sectional view along the optical axis AX. The waveguide-fiber coupling structure 3 has a hollow 15D immediately below the coupling region C between the optical waveguide 13 and the core 21 of the optical fiber 20. The hollow 15D is wider toward the end surface 121 of a waveguide chip 10D or the coupling region C. A shape and a size of the hollow 15D are not particularly limited as long as the distal end of the optical waveguide 13 and the distal end of the core 21 of the optical fiber 20 (or the taper 21t) may be brought into contact with each other and deflected in the -Z direction. By making the hollow 15D wider toward the distal end of the optical waveguide 13 and narrower toward a rear end of the hollow, when a plurality of the optical fibers is mounted, an interval between the optical fibers is narrowed to enable high-density light input/output.

A planar shape of the hollow 15D in an X-Y plane is not limited to a triangle surrounded by straight lines as illustrated in FIG. 7, and may be a shape expanding toward the coupling region C with exponential curves. Since the entire coupling region C deflects in the -Z direction in the hollow 15D, coupling deviation in the Z direction and the X direction is suppressed, and reliability of coupling in the waveguide-fiber coupling structure 3 is improved.

### <Fifth Modification>

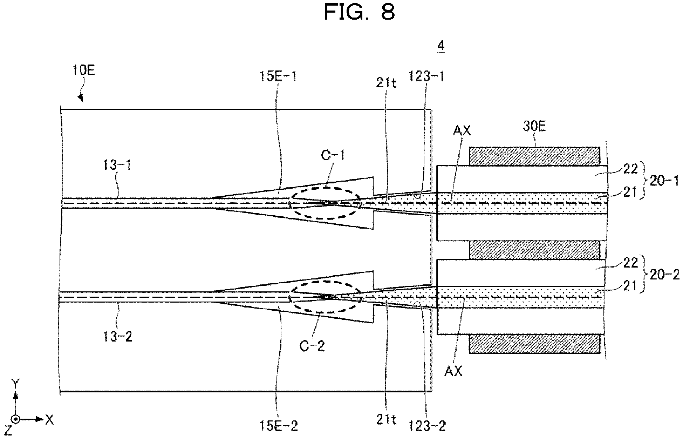

FIG. 8 is a schematic view of a waveguide-fiber coupling structure 4 as a fifth modification. The waveguide-fiber coupling structure 4 is a configuration obtained by extending the waveguide-fiber coupling structure 3 of FIG. 7 into a plurality of arrays. In a waveguide chip 10E, a plurality of optical waveguides 13-1 and 13-2 is formed. The optical waveguides 13-1 and 13-2 are coupled to corresponding optical fibers 20-1 and 20-2. The optical fibers 20-1 and 20-2 may be held at a fiber holding stand 30E to configure a fiber array.

The optical waveguide 13-1 and the optical fiber 20-1 are optically coupled in a coupling region C-1, and the optical waveguide 13-2 and the optical fiber 20-2 are optically coupled in a coupling region C-2. Hollows 15E-1 and 15E-2 are formed immediately below the coupling regions C-1 and C-2. In the hollow 15E-1, the optical waveguide 13-1 and the optical fiber 20-1 are in contact with each other and are deflected in the -Z direction. In the hollow 15E-2, the optical waveguide 13-2 and the optical fiber 20-2 are in contact with each other and are deflected in the -Z direction. With this configuration, position deviation in the Z direction and the X direction is absorbed in each of the coupling regions C-1 and C-2. Shapes of the hollows 15E-1 and 15E-2 narrow an interval between the optical fibers 20-1 and 20-2 to enable high-density light input/output. In a case where the fiber guides 123-1 and 123-2 are provided in the waveguide chip 10E, positions of the core of the optical fiber 20-1 and the core of the optical fiber 20-2 are fixed, and position deviation in the Y direction is also suppressed. In a case where the taper 21t is provided at the distal end of the core of the optical fiber 20, by forming the fiber guides 123-1 and 123-2 corresponding to inclination of the taper of the core, the position deviation in both the Y direction and the X direction is suppressed.

### <Manufacture of Waveguide Chip >

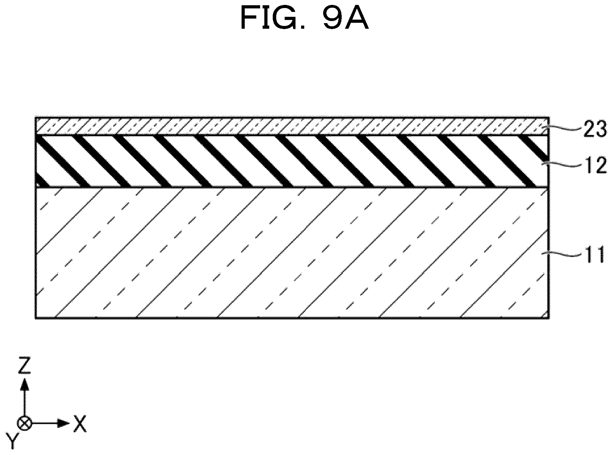

FIGs. 9A to 9D are manufacturing process views of a waveguide chip. As the waveguide chip, for example, the waveguide chip 10B of FIG. 5 is manufactured. In FIG. 9A, the substrate 11 for a waveguide chip is prepared, and the clad layer 12 and a core layer 23 are formed over an entire surface. The substrate 11 is an optional substrate that may support the clad layer 12 and the core layer 23. As an example, a Si substrate is used. The clad layer 12 is formed of the material having the refractive index lower than that of the core layer 23, and SiO₂, magnesium fluoride (MgF₂), calcium fluoride (CaF₂), or the like may be used. In this example, the clad layer 12 of SiO₂ is formed. When the clad layer 12 of SiO₂ is formed, a Si substrate with a thermal oxide film may be used. The core layer 23 is formed on the clad layer 12. The core layer 23 is formed of a material having a refractive index higher than that of the clad layer 12 and transparent to a wavelength of a photon to be detected. In this example, the material having the refractive index higher than that of SiO₂ and transparent to visible light is used, and diamond, sapphire (Al₂O₃ single crystal), SiN, AlN, or the like is used. As an example, the Al₂O₃ single crystal thin film having a thickness of several hundred nanometers is formed as the core layer 23 on the clad layer 12 of SiO₂ by high-vacuum chemical vapor deposition or low pressure chemical vapor deposition.

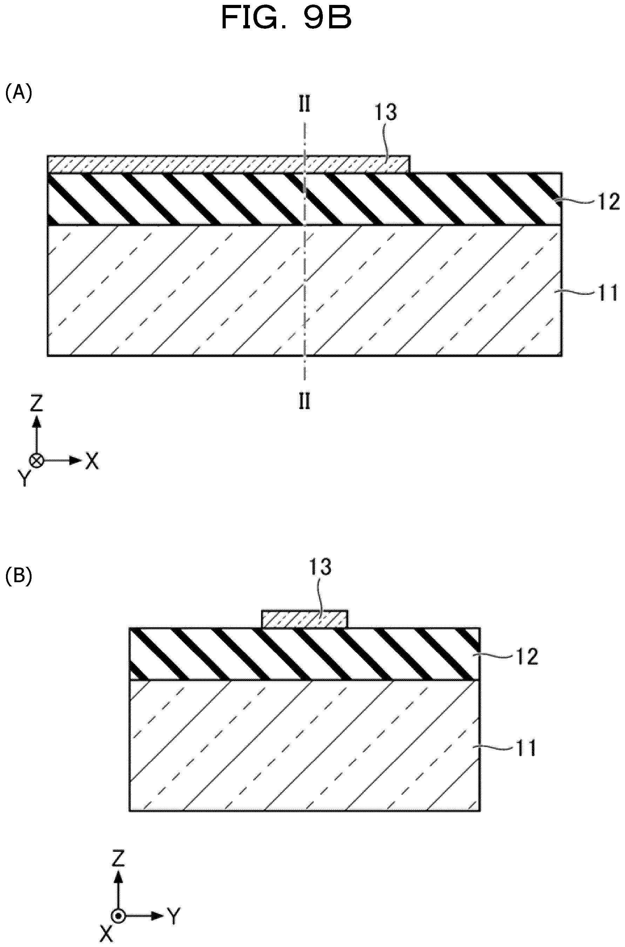

In FIG. 9B, the core layer 23 is processed to form the optical waveguide 13. A is a cross-sectional view taken along the optical axis (X axis), and B is a cross-sectional view taken along a line II-II of A. A resist for an electron beam is applied to an entire surface to cover the core layer 23, and a resist mask having a shape of the optical waveguide 13 is formed by electron beam exposure and development. The optical waveguide 13 is formed by etching the core layer 23 (see FIG. 9A) using the resist mask as a protective film. As an example, the optical waveguide 13 having a thickness of 200 nm and a width of 800 nm is formed. In a case where the taper 13t is provided at the distal end of the optical waveguide 13, at this stage, the etching is performed so that at least one of the width and the height of the optical waveguide 13 continuously and gradually decreases toward the distal end.

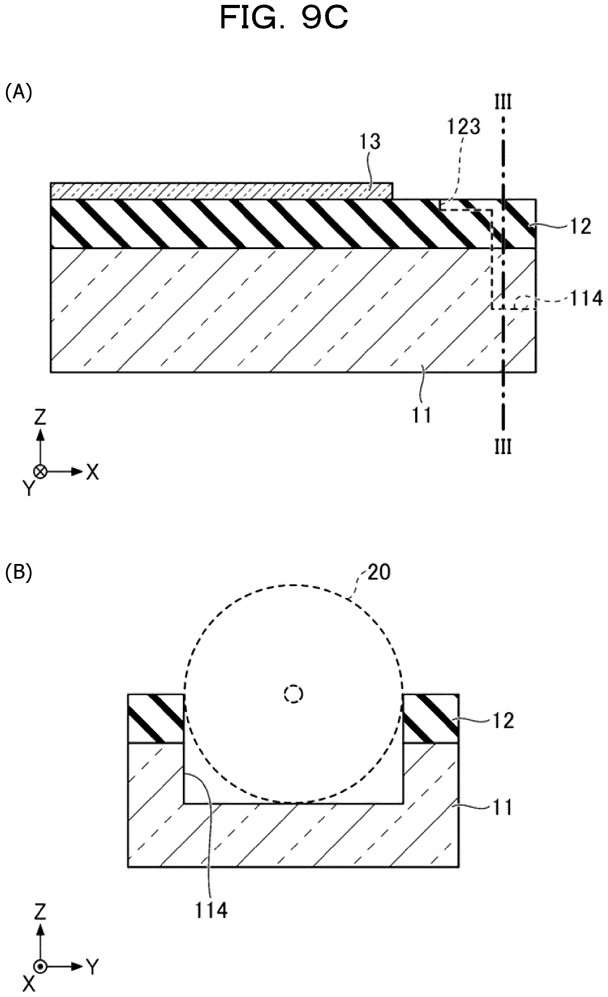

In FIG. 9C, the groove 114 for fiber holding and the fiber guide 123 are formed. A is a cross-sectional view taken along the optical axis (X axis), and B is a cross-sectional view taken along a line III-III of A. For reference, an outline of the optical fiber 20 set in a subsequent assembly process is indicated by a broken line. A resist for an electron beam is applied to the entire surface of the substrate surface at which the optical waveguide 13 is formed. A resist mask in which only a region where the groove 114 is to be formed is exposed is formed by electron beam exposure and development, and the groove 114 is formed by etching. Instead of the electron beam exposure, the groove 114 may be formed by normal photolithography and etching. Thereafter, the resist mask is once removed, a new resist for an electron beam is applied, and the fiber guide 123 is formed in a similar process.

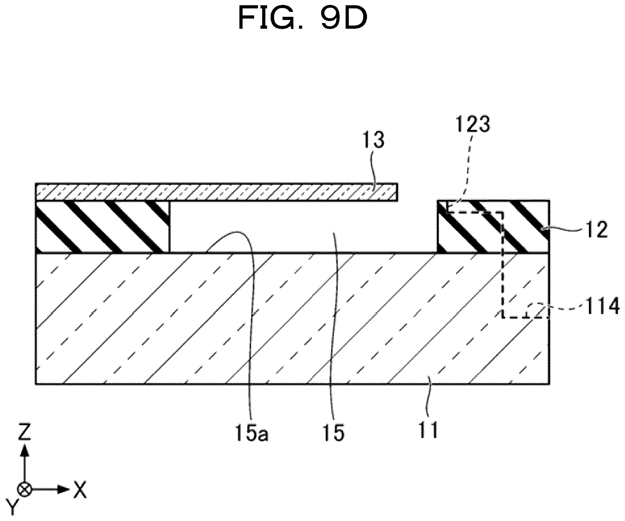

In FIG. 9D, the hollow 15 is formed. A mask covering the entire surface except for a region where the hollow 15 is to be formed is formed by photolithography, and the clad layer 12 in a predetermined range is removed by etching with vaporized hydrofluoric acid. Si is easily etched by fluorine atoms, but Al is hardly etched by fluorine atoms. Etching selectivity of hydrofluoric acid gas to SiO₂ and Al₂O₃ is large, and the clad layer 12 of SiO₂ may be removed with almost no erosion of the optical waveguide 13 formed of the Al₂O₃ single crystal thin film. The hydrofluoric acid gas is a reactive gas, and isotropic dry etching may be performed. With this configuration, the hollow 15 is formed over the predetermined region immediately below the optical waveguide 13. In FIG. 9D, the bottom surface 15a of the hollow 15 reaches the surface of the substrate 11, but the bottom surface 15a of the hollow 15 does not need to reach the surface of the substrate 11 as long as a space in which the optical waveguide 13 and the core 21 of the optical fiber 20 are deflected in the -Z direction is secured. The depth of the hollow 15 may be designed as appropriate.

### <Formation of Taper of Optical Fiber Distal End>

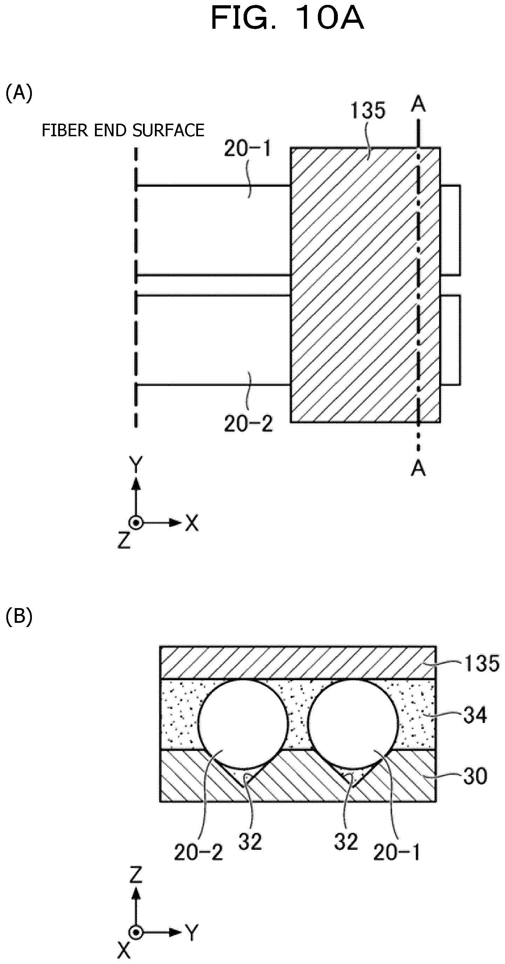

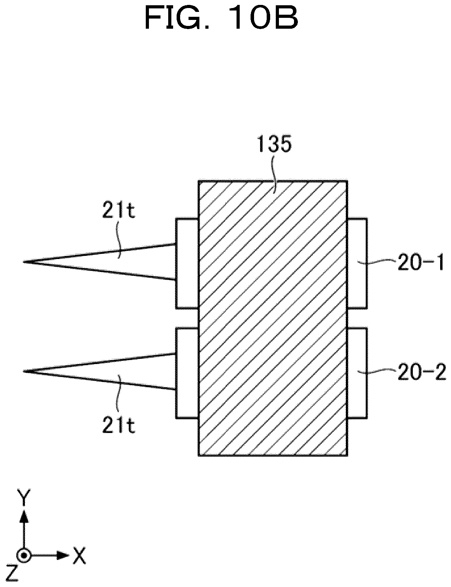

FIGs. 10A and 10B illustrate a process of forming the taper 21t at a distal end of the optical fiber 20. In FIG. 10A, A is a top view, and B is a cross-sectional view taken along a line A-A of A. Distal end surfaces of the optical fibers 20-1 and 20-2 are aligned, and the optical fibers 20-1 and 20-2 are disposed in V-shaped grooves 32 of the fiber holding stand 30, fixed with resin 34, and covered with a cover 135. The cover 135 is for facilitating handling at the time of processing distal ends of the optical fibers 20-1 and 20-2, and may be removed after formation of the tapers.

In FIG. 10B, the distal ends of the optical fibers 20-1 and 20-2 protruding from the fiber holding stand 30 are immersed in a hydrofluoric acid solution, and gradually pulled up. The clads are preferentially removed due to a difference in dissolution rate between the cores and the clads of the optical fibers with respect to the hydrofluoric acid solution. Furthermore, the distal ends of the cores having a longer immersion time in the hydrofluoric acid solution become thinner. The taper angle of the core distal end is controlled by a pulling-up speed of the optical fiber 20, a hydrofluoric acid concentration in the solution, and the like. By this wet etching, the taper 21t is formed in each of the optical fibers 20-1 and 20-2.

### <Coupling between Optical Waveguide and Optical Fiber>

The optical fibers 20-1 and 20-2 in which the tapers 21t are formed are coupled to the optical waveguides 13-1 and 13-2 (see FIG. 6) on the waveguide chip. An array of the optical fibers 20-1 and 20-2 fixed to the fiber holding stand 30 is placed on a piezo stage having a three-axis actuator, and the tapers 21t are guided to the fiber guides 123 of the waveguide chip. While entering test light and observing a microscopic image and optical loss, the distal ends of the tapers 21t of the optical fibers 20-1 and 20-2 are overlapped on the optical waveguides 13-1 and 13-2 floating over the hollow 15, and a position where the optical loss is minimized is determined. Since the tapers 21t of the optical fibers 20-1 and 20-2 overlap the optical waveguides 13-1 and 13-2, the optical waveguides 13-1 and 13-2 deflect downward (in the -Z direction) inside the hollow 15 while maintaining the contact between the optical fibers 20-1 and 20-2. By this method, the waveguide-fiber coupling structure with the improved coupling reliability is obtained.

In this manner, by
(a) forming an optical waveguide on a clad layer formed on a substrate,
(b) removing a part of the clad layer below the optical waveguide and forming a hollow below the optical waveguide, and
(c) bringing a core of an optical fiber into contact with a distal end of the optical waveguide that extends in the hollow and deflecting the optical waveguide and the core in a lamination direction of the optical waveguide inside the hollow,
coupling deviation between the optical waveguide and the optical fiber at least in the Z direction and the X direction is suppressed, and coupling reliability between the optical waveguide and the optical fiber is improved.

### <Analysis of Coupling between Optical Waveguide and Optical Fiber>

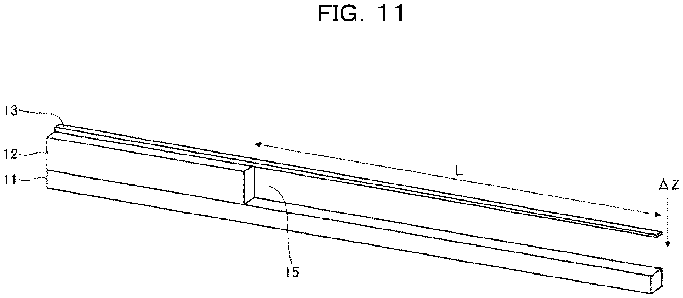

FIG. 11 illustrates a stress analysis model of the optical waveguide 13 protruding from the hollow 15 of the waveguide chip 10. In the model, the clad layer 12 of SiO₂ having a thickness of 2 µm is provided on the substrate 11 of Si, and the optical waveguide 13 of sapphire having the width of 800 nm and the thickness of 200 nm is provided on the clad layer 12. A stress when a length L of the optical waveguide 13 protruding into the hollow 15 is set to 20 µm and the distal end of the optical waveguide 13 is displaced downward by 0.1 µm (ΔZ = 0.1 µm) is examined.

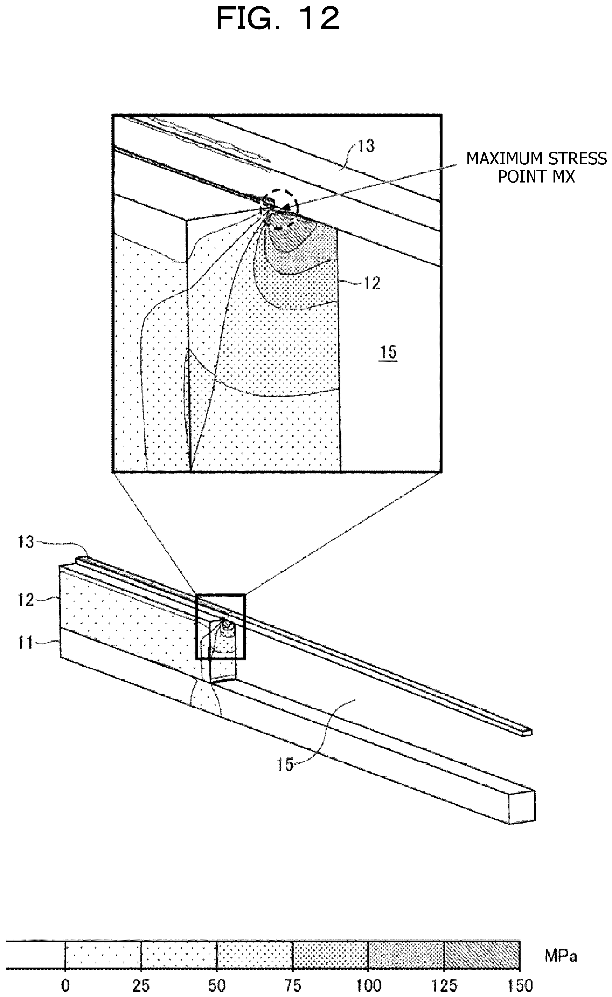

FIG. 12 illustrates a stress distribution and a maximum stress point. In the model of FIG. 11, in a case where the optical waveguide 13 protruding by 20 µm is displaced downward (in the -Z direction) by 0.1 µm, the stress of 150 MPa at maximum is applied in the -Z direction. A maximum stress point MX is a contact point between an upper end of the clad layer 12 and the optical waveguide 13 forming the hollow 15.

The sapphire as the material of the optical waveguide 13 has a fracture stress of about 170 MPa. In a case where the sapphire waveguide is used, the optical waveguide 13 may be deflected in the hollow 15 as long as a deflection amount is 0.1 µm/20 µm or less. For example, in a case where the length of the optical waveguide 13 having a cross-sectional area adiabatic coupling and protruding into the hollow 15 is 200 µm, the optical waveguide 13 may be deflected by 1 µm in the -Z direction. The shape of the optical waveguide 13 itself may have been changed into the tapered shape from a stage before reaching the hollow 15. For example, the length of the entire taper of the optical waveguide 13 may be set to 1 mm, and 400 µm thereof may protrude into the hollow 15.

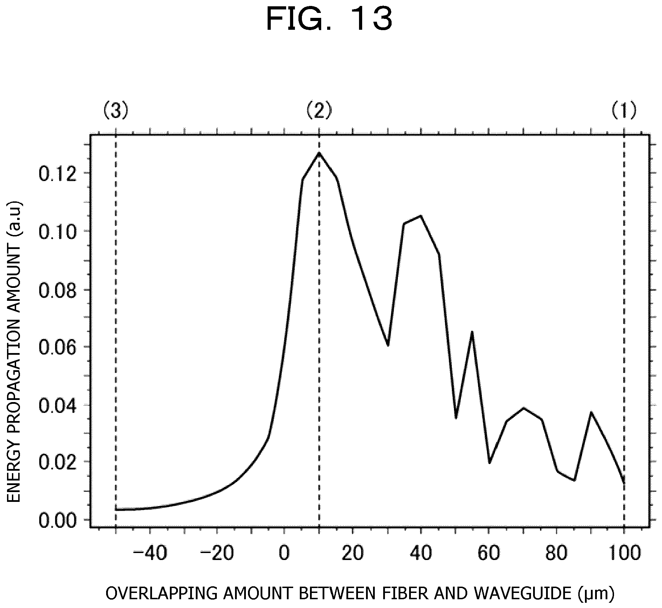

FIG. 13 illustrates a relationship between an overlapping amount (µm) of the optical fiber and the waveguide in the coupling region C and an energy propagation amount. The energy propagation amount on a vertical axis is a relative energy propagation amount when an input is 1. A configuration is considered in which light is incident from the optical fiber having a length of the taper of 400 µm into the optical waveguide 13 having the length L of 200 µm from the maximum stress point MX and protruding into the hollow 15. It is assumed that a length by which the distal end of the taper of the optical fiber 20 extending from the X direction comes into contact with the optical waveguide 13 in the hollow 15 is the overlapping amount (µm). A negative value of the overlapping amount indicates a state where the optical waveguide and the core of the optical fiber are not in contact with each other, but light emitted from the core propagates in the air and is coupled to the optical waveguide. When it is assumed that the energy propagation amount of 0.04 or more is an allowable range, the overlapping amount between the optical waveguide 13 and the optical fiber 20 is 0 µm or more and 90 µm or less, and preferably 0 µm or more and 70 µm or less. When the energy propagation amount of 0.06 or more is achieved, the overlapping amount is 0 µm or more and 60 µm or less, preferably 5 µm or more and 60 µm or less, and more preferably 5 µm or more and 50 µm or less. When the optical waveguide 13 deflects in the -Z direction in the hollow 15 in this range of the overlapping amount, the distal end of the core 21 of the optical fiber deflects into the hollow 15 together with the optical waveguide 13 following displacement of the optical waveguide 13, the contact between the optical waveguide 13 and the optical fiber 20 is maintained, and desired optical coupling is obtained.

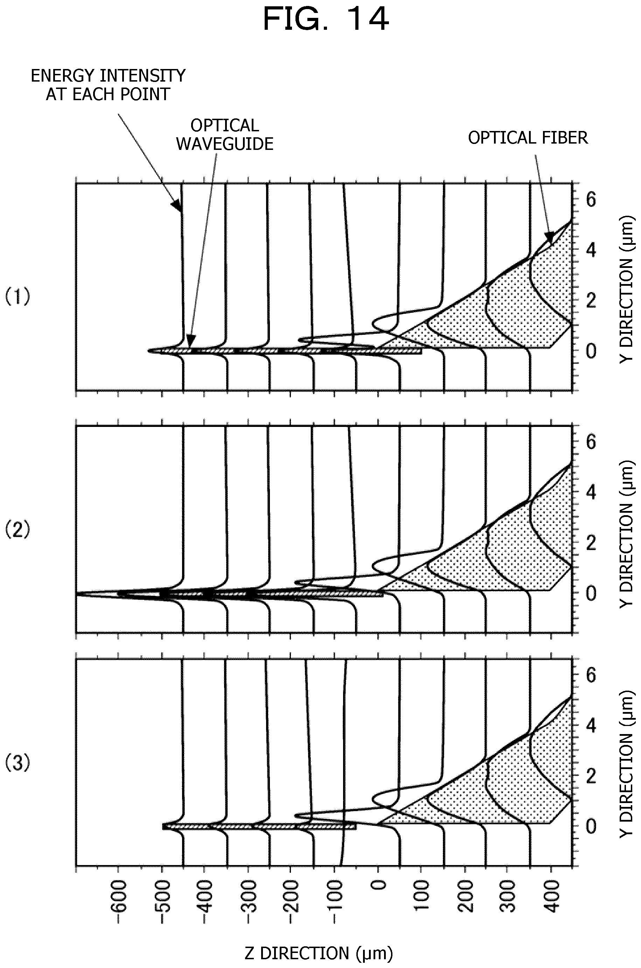

FIG. 14 illustrates energy propagation at the time of the overlapping amounts (1), (2), and (3) in FIG. 13. The overlapping amount (1) is 100 µm, the overlapping amount (2) is 10 µm, and the overlapping amount (3) is -50 µm. The energy propagation amount from the optical fiber to the waveguide is the largest at the time of the overlapping amount (2), and decreases in order of (1) and (3). As may be seen also from FIG. 13, light is coupled even when the waveguide and the optical fiber are not in contact with each other. It is not necessarily sufficient that an amount of contact between the waveguide and the optical fiber is large, but there is a contact length suitable for the energy propagation, in other words, optical coupling. From results of simulation, the preferable contact length (overlapping amount) is more than 0 µm and 60 µm or less, and preferably 5 µm or more and 60 µm or less.

### <Quantum Optical Circuit>

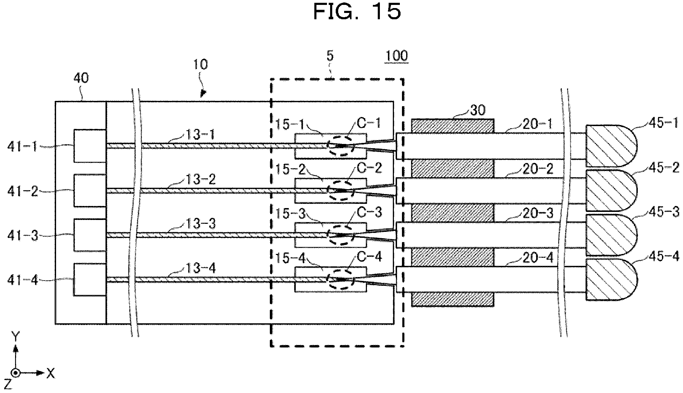

FIG. 15 is a schematic view of a quantum optical circuit 100 using a waveguide-fiber coupling structure 5 of the embodiment. The waveguide-fiber coupling structure 5 may use any one configuration illustrated in FIGs. 2 to 8 or a combination thereof. In this example, four optical waveguides 13-1, 13-2, 13-3, and 13-4 (collectively referred to as "optical waveguides 13" as appropriate) are formed in the waveguide chip 10, and are coupled to four single-mode optical fibers 20-1, 20-2, 20-3, and 20-4 (collectively referred to as "optical fibers 20" as appropriate) by the waveguide-fiber coupling structure 5.

Hollows 15-1, 15-2, 15-3, and 15-4 (collectively referred to as "hollows 15" as appropriate) are formed in the waveguide-fiber coupling structure 5, and a distal end of the optical waveguide 13 and a distal end of the optical fiber 20 are in contact with each other in each hollow 15. An end of the waveguide chip 10 on a side opposite to the waveguide-fiber coupling structure 5 is coupled to a photon source 40. The photon source 40 includes single photon sources 41-1, 41-2, 41-3, and 41-4 (collectively referred to as "single photon sources 41" as appropriate), each of which is independent from the other.

The single photon sources 41-1, 41-2, 41-3, and 41-4 are, for example, NV color centers formed at appropriate intervals in diamond. The NV color center may be formed by irradiating a diamond crystal thin film including N impurities at a predetermined concentration with heavy ions such as xenon (Xe) to eject carbon (C) elements to form atomic vacancies. Photons generated in the single photon sources 41 travel in the corresponding optical waveguides 13. In the waveguide chip 10, a gate that operates one qubit (gives predetermined rotation) or a gate that acts on two qubits may be formed.

States of the photons travelling through the optical waveguides 13 and coupled to the corresponding optical fibers 20 in the waveguide-fiber coupling structure 5 are detected by detectors. Ends of the optical fibers 20-1, 20-2, 20-3, and 20-4 on a side opposite to the waveguide-fiber coupling structure 5 are coupled to detectors 45-1, 45-2, 45-3, and 45-4 (collectively referred to as "detectors 45" as appropriate). The detector 45 is a detector in which organic chiral molecules are introduced into an inorganic material such as halogenated perovskite, for example, and directly detects clockwise polarized light and counterclockwise polarized light of the photons. Outputs of the detectors 45-1, 45-2, 45-3, and 45-4 may be converted into voltage signals and input to a general-purpose information processing device.

In each of the hollows 15-1 to 15-4 of the waveguide-fiber coupling structure 5, the distal ends of the corresponding optical waveguide and optical fiber are deflected in the -Z direction while overlapping each other and maintaining the contact, so that coupling deviation in the Z direction and the X direction may be suppressed. In a case where the fiber guide for guiding the distal end of the core of the optical fiber 20 is provided in the waveguide chip 10, position deviation of the optical waveguide 13 and the optical fiber 20 in the Y direction is also suppressed. Since coupling reliability is improved in each of the coupling regions C-1 to C-4, reliability of an operation of the quantum optical circuit 100 is improved.

In a case where coating of an inert gas is applied to the optical waveguide 13 and the optical fiber 20 at least in the coupling regions C-1 to C-4, resistance to external vibration is further improved, and the reliability of the quantum optical circuit 100 is further improved.

The embodiment has been described above based on the specific configuration examples, but the present disclosure is not limited to the embodiment described above. The embodiment and two or more of the modifications described above may be combined with each other. The coating 18 of the inert gas is applicable to all the waveguide-fiber coupling structures described above, and the fiber guide configuration of FIG. 5 is applicable to all the waveguide-fiber coupling structures described above. The waveguide-fiber coupling configurations and the quantum optical circuit of the embodiment are applicable to quantum computing, quantum information communication, quantum optics, cryptographic communication, and the like.

## Claims

1. A device comprising:
a waveguide chip that includes a clad layer and an optical waveguide formed on the clad layer; and
an optical fiber optically coupled to the optical waveguide,
wherein the clad layer has a hollow below a coupling region where the optical waveguide is optically coupled to the optical fiber, and
the optical waveguide contacts the optical fiber in the coupling region, and deflects in a lamination direction of the waveguide chip inside the hollow.

2. The device according to claim 1, wherein
the optical waveguide has a first tapered portion that becomes thinner toward the coupling region,
the optical fiber has a second tapered portion that becomes thinner toward the coupling region, and
the second tapered portion overlaps the first tapered portion inside the hollow.

3. The device according to claim 2, wherein
the first tapered portion and the second tapered portion are in contact with each other with a length of more than 0 µm and 60 µm or less in an optical axis direction.

4. The device according to claim 1, wherein
the optical waveguide is formed of a material that is transparent to visible light and has a refractive index higher than a refractive index of the clad layer.

5. The device according to claim 4, wherein
the optical waveguide is formed of sapphire, diamond, silicon nitride, or aluminum nitride.

6. The device according to claim 2, wherein
the waveguide chip includes a fiber guide that guides the second tapered portion of the optical fiber to the hollow.

7. The device according to claim 6, wherein
the waveguide chip includes a groove that communicates with the fiber guide and receives an outer periphery of the optical fiber that extends from the second tapered portion.

8. The device according to claim 1, wherein
at least the coupling region between the optical waveguide and the optical fiber is coated with an inert gas.

9. The device according to claim 1, wherein
a width of the hollow becomes wider toward a side into which the optical fiber is introduced.

10. The device according to claim 1, wherein
the optical fiber is a single mode fiber.

11. The device according to claim 1, further comprising
a fiber holding stand that holds the optical waveguide.

12. The device according to claim 1, wherein
a plurality of optical waveguides is formed at the waveguide chip,
each of a plurality of optical fibers is coupled to each of the plurality of optical waveguides, and
the hollow is provided for each set of the optical waveguide and the optical fiber coupled to each other.

13. The device according to claim 12, further comprising
a fiber holding stand that holds an array of the plurality of optical fibers.

14. A quantum optical circuit comprising:
a device that includes an optical waveguide formed on a clad layer and an optical fiber;
a single photon source optically coupled to the optical waveguide; and
a detector that is coupled to the optical fiber and detects a state of a photon,
wherein the device has a hollow below a coupling region where the optical waveguide is optically coupled to the optical fiber, and the optical waveguide contacts the optical fiber in the coupling region, and deflects in a lamination direction of the optical waveguide inside the hollow.

15. A method for manufacturing a device, the method comprising:
forming an optical waveguide on a clad layer formed on a substrate;
removing a part of the clad layer below the optical waveguide and forming a hollow below the optical waveguide; and
bringing an optical fiber into contact with the optical waveguide that extends in the hollow and deflecting the optical waveguide and the optical fiber in a lamination direction of the optical waveguide inside the hollow.
